(19) Europäisches Patentamt
European Patent Office
Office européen des brevets

(11) Publication number: **0 446 947 B1**

# (12) EUROPEAN PATENT SPECIFICATION

(45) Date of publication of patent specification: **24.05.95**

(51) Int. Cl.[6]: **B01D 71/64**, B01D 53/22, C08G 73/10

(21) Application number: **91104053.3**

(22) Date of filing: **15.03.91**

## (54) Gas separating asymmetric membrane.

(30) Priority: **15.03.90 JP 62565/90**

(43) Date of publication of application:
**18.09.91 Bulletin 91/38**

(45) Publication of the grant of the patent:
**24.05.95 Bulletin 95/21**

(84) Designated Contracting States:
**DE FR GB**

(56) References cited:
**EP-A- 0 263 212**
**EP-A- 0 407 172**
**US-A- 4 690 873**

**JOURNAL OF MEMBRANCE SCIENCE. vol. 46, no. 1, September 1989, AMSTERDAM NLpages 43 - 56; TAE-HAN KIM: 'TEMPERATURE EFFECTS ON GAS PERMSELECTION-PROPERTIES IN HEXAFLUORO AROMATIC POLYIMIDES '**

(73) Proprietor: **UBE INDUSTRIES, LTD.**
**12-32, Nishihonmachi 1-chome**
**Ube-shi, Yamaguchi-ken (JP)**

(72) Inventor: **Kusuki, Yoshihiro, c/o Chiba Kenkyusho**
**Ube Industries Ltd.,**
**8-1, Goi Minamikaigan**
**Ichihara-shi,**
**Chiba-ken, 290 (JP)**
Inventor: **Yoshinaga, Toshimune, c/o Chiba Kenkyusho**
**Ube Industries Ltd.,**
**8-1, Goi Minamikaigan**
**Ichihara-shi,**
**Chiba-ken, 290 (JP)**
Inventor: **Hosino, Harutoshi, c/o Chiba Kenkyusho**
**Ube Industries Ltd.,**
**8-1, Goi Minamikaigan**
**Ichihara-shi,**
**Chiba-ken, 290 (JP)**
Inventor: **Asanuma, Shinji, c/o Chiba Kenkyusho**
**Ube Industries Ltd.,**
**8-1, Goi Minamikaigan**
**Ichihara-shi,**
**Chiba-ken, 290 (JP)**

EP 0 446 947 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

(74) Representative: **Kraus, Walter, Dr. et al**
**Patentanwälte Kraus, Weisert & Partner**
**Thomas-Wimmer-Ring 15**
**D-80539 München (DE)**

## Description

The present invention relates to a gas separating asymmetric hollow fiber membrane comprising an aromatic polyimide. In more detail, the invention relates to a gas separating asymmetric membrane having good heat-resisting property and pressure-resisting property. Particularly, the invention relates to a gas separating asymmetric hollow fiber membrane exhibiting an excellent gas transmission property (gas transmission rate) and a high gas selectivity. The invention also relates to a process for the preparation of such excellent gas separating asymmetric hollow fiber membrane.

It has been previously known the process to prepare an asymmetric gas separating membrane (including an asymmetric hollow fiber membrane) having a homogeneous surface layer on one side and a porous layer on another side in accordance with the wet membrane-forming method in which are used a coagulation liquid and a solution of soluble aromatic polyimide made from the aromatic tetracarboxylic acid component comprising mainly biphenyltetracarboxylic dianhydride and an aromatic diamine component comprising mainly an aromatic diamine having $-SO_2-$ group in its molecular structure. For example, the process is disclosed in US-A-4,690,873.

The above-mentioned gas separating membrane comprising the biphenyltetracarboxylic acid-type aromatic polyimide has not only good heat-resisting property and chemical-resisting property but also an excellent gas selectivity particularly for carbon dioxide gas. However, the membrane does not always exhibit satisfactory gas transmission rates when it is used for separating various gaseous mixtures in some practical use. Therefore, it is desired to develop a gas separating asymmetric membrane exhibiting improved gas transmission rate.

In US-A-3,899,309 and US-A-4,717,394, a polyimide gas separating membrane made of an aromatic polyimide which is prepared from an aromatic diamine having one or two benzene rings and an aromatic tetracarboxylic acid component such as pyromellitic dianhydride, benzophenonetetracarboxylic dianhydride, biphenyltetracarboxylic dianhydride, 2,2-bis(3,4-dicarboxyphenyl)hexafluoropropanic dianhydride (hereinafter referred to as "6-FDA"), or the like is disclosed.

Further, with respect to a gas separating membrane exhibiting a high transmission rate for oxygen gas, there is known, for example, an oxygen enriching membrane of which separating layer is made of polyorganosiloxane (Japanese Patent Provisional Publication No. 1(1989) -94917). However, since this membrane exhibits a low gas selectivity in the case of oxygen gas separation from a mixed gas consisting of oxygen and nitrogen, it leaves something unsatisfactory when it is used for obtaining highly purified oxygen gas, for example, for the purpose of oxygen enriching or nitrogen enriching for medical use. Therefore, it is desired to develop a gas separating membrane having both an excellent gas transmission rate and a high selective permeability (selectivity).

EP-A-0 407 172 relates to a process for preparing an aromatic polyimide separation membrane, which process comprises fluorinating an aromatic polyimide membrane with active fluorine. This document is cited under Article 54(3) and (4) EPC.

An object of the present invention is to provide a gas separating asymmetric membrane including a gas separating asymmetric hollow fiber membrane which is made of a new aromatic polyimide and which has excellent properties such as heat-resisting and chemical-resisting properties and which exhibits not only a high selective permeability (a high gas selectivity) but also a gas transmission rate (for example, an oxygen gas transmission rate) superior to those of known polyimide gas separating membranes.

Another object of the present invention is to provide a process by which the above gas separating asymmetric hollow fiber membrane can be prepared easily with high reproducibility.

The invention resides in a gas separating asymmetric hollow fiber membrane comprising an aromatic polyimide of which recurring unit is expressed by the formula (I):

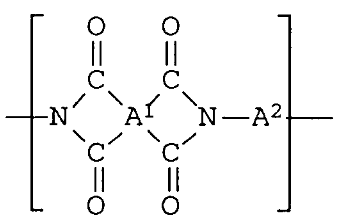

(I)

wherein $A^1$ is a tetravalent unit, at least 40 molar % of which has a diphenylhexafluoropropane structure expressed by the formula (II):

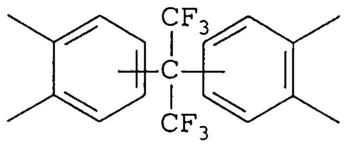

(II)

and $A^2$ comprises at least two divalent units, at least 35 molar % of which is selected from the group consisting of

a unit expressed by the formula (IV):

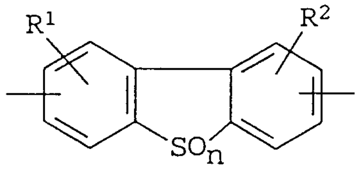

(IV)

in which $R^1$ and $R^2$ independently represent hydrogen or an organic group and n is 0, 1 or 2 , and

a unit expressed by the formula (V):

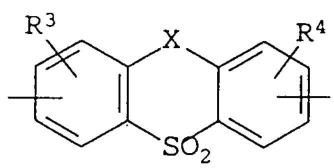

(V)

in which $R^3$ and $R^4$ independently represent hydrogen or an organic group and X is $-CH_2-$ or -CO-, and the rest of $A^2$ is a divalent unit derived from a divalent aromatic amine by eliminating its amine groups, said divalent aromatic amine being selected from the group consisting of diaminodiphenylethers, diaminodiphenylmethanes, diaminodibenzyls, diaminobenzophenones, bis(aminophenyl)propanes, benzidines, phenylenediamines, 3,5-diaminobenzoic acid and 2,6-diaminopyridine.

Preferably, the organic group for $R^1$, $R^2$, $R^3$, and $R^4$ is an alkyl group having 1-6 carbon atoms such as methyl, ethyl, n-propyl, isopropyl, n-butyl, isobutyl, pentyl or hexyl, an alkoxy group having 1-6 carbon atoms such as methoxy, ethoxy or isopropoxy, or a hydroxyalkyl group having 1-6 carbon atoms such as hydroxymethyl, hydroxyethyl or hydroxypropyl.

Preferably, the gas separating asymmetric membrane of the invention comprises an aromatic polyimide of which recurring unit is expressed by the formula (I):

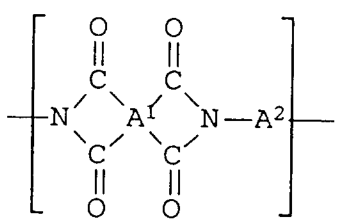

(I)

[wherein 40-100 molar %,of $A^1$ is a tetravalent unit having a diphenylhexafluoropropane structure expressed by the formula (II):

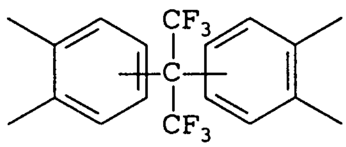

(II)

and the rest of $A^1$ is a tetravalent unit having a biphenyl structure expressed by the formula (III):

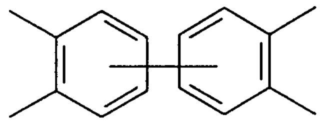

(III)

and 35-100 molar % of $A^2$ is

a divalent unit expressed by the formula (IV):

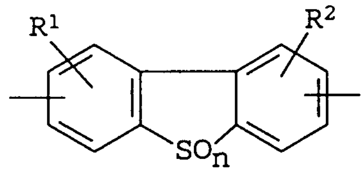

(IV)

(in which $R^1$, $R^2$ and n are the same as above); and/or

a divalent unit expressed by the formula (V):

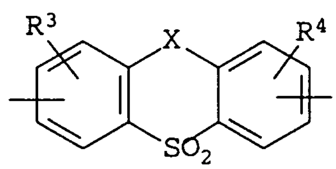

(V)

(in which $R^3$, $R^4$ and X are the same as defined as above);

and the rest of $A^2$ is a divalent unit derived from a divalent aromatic amine by eliminating its amine groups, said divalent aromatic amine being selected from the group consisting of diaminodiphenylethers, diaminodiphenylmethanes, diaminodibenzyls, diaminobenzophenones, bis(aminophenyl)propanes, benzidines, phenylenediamines, 3,5-diaminobenzoic acid and 2,6-diaminopyridine.

The gas separating asymmetric hollow fiber membrane of the invention can be prepared by a process which comprises the steps of:

preparing a dope solution in which an aromatic polyimide (which is soluble in a certain polar organic solvent) of which recurring unit is expressed by the above-mentioned formula (I),

extruding the dope solution from a spinning nozzle in the form of a hollow filament, and

introducing the hollow filament into a coagulation liquid of a polar organic solvent to form a coagulated gas separating hollow fiber membrane.

The gas separating asymmetric hollow fiber membrane of the invention is made of an aromatic polyimide consisting essentially of the recurring unit expressed by the above formula (I) which is soluble in certain organic solvents, and comprises a very thin (preferably, 0.001-5 $\mu$m) homogeneous layer, which directly influences to the gas selective property, and a comparatively thick (preferably, about 10-2,000 $\mu$m) porous layer, which supports the homogeneous layer, in a body. The membrane of the invention is in the form of a gas separating asymmetric hollow fiber membrane (i.e., gas separating asymmetric hollow filament) through which the aimed gas in a gaseous mixture can permeate selectively.

Aromatic polyimides other than the aromatic polyimide of the invention are disadvantageous as the material for the gas separation asymmetric membrane, because some such polymer having high molecular weight can not be easily prepared, some such polyimides are insoluble in polar organic solvents, and it is difficult to prepare some such polyimide solution suitable for forming gas separating asymmetric membranes. Even if some gas separating asymmetric membranes using such polyimides can be formed, their oxygen gas transmission rates are less than the practically desired level such as $37.5 \cdot 10^{-11}$

$$\frac{m^3}{m^2 \cdot s \cdot Pa}$$

($5 \cdot 10^{-5}$ $cm^3/cm^2 \cdot sec \cdot cmHg$).

As described hereinbefore, some 6-FDA-type aromatic polyimides are known. However, according to the study by the present inventor, the known 6-FDA-type aromatic polyimides have some disadvantages. For example, a polymer having high molecular weight can be hardly prepared in the case where some of the indicated aromatic amine components are used, and even if a polyimide solution is prepared, it is very difficult to form with high reproducibility a gas separating asymmetric membrane exhibiting both an excellent gas transmission rate and a high gas selectivity.

The recurring unit expressed by the formula (I) preferably comprises the units expressed by the following formulae (VI) and (VII):

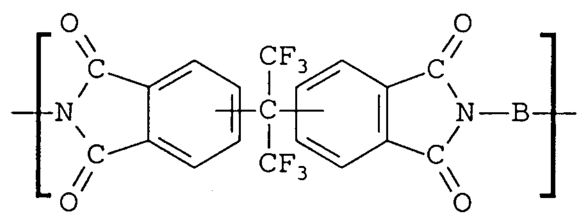

(VI)

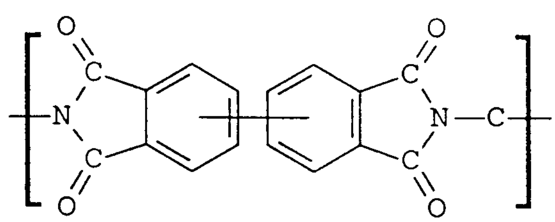

(VII)

[wherein B and C independently represent divalent aromatic residues which are obtained by eliminating amino groups from aromatic diamines.

The aromatic polyimide employable for the invention preferably has the recurring unit expressed by the formula (VI) in an amount of 40-100 molar %, more preferably 45-100 molar %.

The aromatic polyimide having the recurring unit of the above formula (I) can be prepared, for example, by polymerisation and imidization, in an organic polar solvent, of the aromatic tetracarboxylic acid component consisting of 2,2-bis(3,4-dicaboxyphenyl)hexafluoropropane or its acid dianhydride or its lower alcohol esters in an amount of at least not less than 40 molar %, preferably not less than 45 molar %, more preferably not less than 50 molar %, and biphenyltetracarboxylic acid or its derivative such as its acid dianhydride or its ester, for the rest; with the aromatic diamine component consisting of aromatic diamine compounds expressed by the following formulae (VIII) and/or (IX):

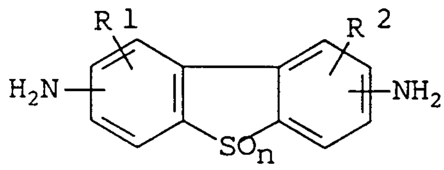

(VIII)

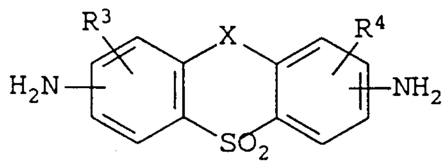

(IX)

(wherein $R^1$, $R^2$, $R^3$, $R^4$, n and X are the same as defined in the formulae (IV) and (V)) in an amount of not less than 35 molar %, preferably not less than 40 molar %, and other aromatic diamine compounds having at least two benzene rings for the rest, in approximately equal molar amount to that of the acid component.

Examples of preferable biphenyltetracaboxylic acids in the above aromatic tetracarboxylic acid component include 2,3,3',4'-biphenyltetracarboxylic acid, its acid dianhydride, 3,3',4,4'-biphenyltetracarboxylic acid and its acid dianhydride.

Together with the above compounds, employable for the tetracarboxylic acid component are biphenylethertetracarboxylic acids and their reactive derivatives such as 3,3',4,4'-biphenylethertetracarboxylic acid and its acid dianhydride, bensophenonetetracarboxylic acids and their reactive derivatives such as 3,3',4,4'-benzophenonetetracarboxylic acid and its acid dianhydride, and pyromellitic acids and their derivatives such as pyromellitic acid and its acid dianhydride, on condition that their amounts are so small as not exceed 10 molar % (preferably employed in the amuont of not more than 5 molar %).

Preferable examples of aromatic diamine compounds expressed by the above formula (VIII) include diaminobenzothiophenes expressed by the formula (X):

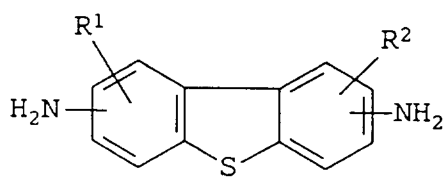

(X),

which is the case that n is 0 in the formula (VIII), and diaminodiphenylenesulfones expressed by the formula (XI):

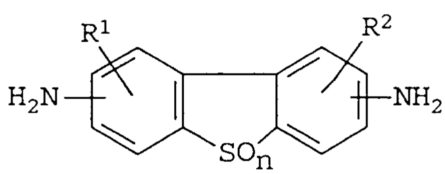

(XI),

which is the case that n is 2 in the formula (VIII).

Examples of the above diaminobensothiophenes (expressed by the formula (X)) include 3,7-diamino-2,8-dimethyl-dibenzothiophene, 2,8-diamino-3,7-dimethyl-dibenzothiophene, 3,7-diamino-2,6-dimethyl-dibensothiophene and 3,7-diamino-2,8-diethyl-dibensothiophene.

Examples of the above diaminodiphenylenesulfones (expressed by the formula (XI)) include 3,7-diamino-2,8-di-methyl-diphenylenesulfone, 3,7-diamino-2,8-diethyl-di-phenylenesulfone, 3,7-diamino-2,8-dipropyl-diphenylenesulfone, 3,7-diamino-2,8-dimethoxy-diphenylenesulfone and 2,8-diamino-3,7-dimethyl-diphenylenesulfone.

Examples of diaminothioxanthene-5,5-dioxides, of which structures are expressed by the formula (IX) in which X is $-CH_2-$, include 3,7-diamino-thioxanthene-5,5-dioxide, 2,8-diamino-thioxanthene-5,5-dioxide and 3,7-diamino-2,8-dimethyl-thioxanthene-5,5-dioxide.

Examples of diaminothioxanthone-5,5-dioxides, of which structures are expressed by the formula (IX) in which X is -CO-, include 3,7-diamino-thioxanthone-5,5-dioxide and 2,8-diamino-thioxanthone-5,5-dioxide.

The aromatic diamine compounds having a plural number of benzene rings employable as the abovementioned aromatic diamine component together with the aromatic diamine compounds are expressed by the formulae (VIII) and (IX) include diaminodiphenylether compounds such as 4,4'-diaminodiphenylether, 3,3'-dimethyl-4,4'-diamino-diphenylether, 3,3'-dimethoxy-4,4'-diaminodiphenylether and 3,3'-diamino-diphenylether; diaminodiphenylmethane compounds such as 4,4'-diaminodiphenylmethane and 3,3'-diaminodiphenylmethane;diaminobibensyl compounds such as 4,4'-diaminobibensyl and 4,4'-diamino-2,2'-dimethylbi-bensyl; diaminobenzophenone compounds such as 4,4'-diaminobenzophenone and 3,3'-diaminobenzophenone; bis(aminophenyl)propane compounds such as 2,2-bis(4-amino-phenyl)propane and 2,2-bis(3-aminophenyl)propane; and benzidine compounds such as 3,3'-dimethylbenzidine and 3,3'-dimethoxybenzidine.

Aromatic diamine having a benzene ring or a pyridine ring such as *o*-, *m*-, and *p*-phenylenediamine, 3,5-diamino-benzoic acid and 2,6-diaminopyridine can be used as a portion (approximately not more than 10 molar %) of the aromatic diamine component.

Particularly preferred aromatic polyimides employable for the gas separating membrane of the invention are prepared from the aromatic tetracarboxylic acid component consisting of 2,2-bis(3,4-dicaboxyphenyl)-hexafluoropropane or its acid dianhydride or its lower alcohol ester in an amount of at least not less than 45 molar %, preferably 50-100 molar %, and 3,3',4,4'-biphenyltetracarboxylic acid or its acid dianhydride for the rest; and the aromatic diamine component consisting of the aromatic diamine compound expressed by the above formulae (VIII) and/or (IX) in an amount of not less than 50 molar %, preferably 70-100 molar %, and the aromatic diamine compound having a plural number of benzene rings (diaminodiphenylethers are particularly preferred) for the rest. The aromatic polyimides prepared in the above-described manner are excellently soluble in polar organic solvent. The polymer solution prepared by the combination of the aromatic polyimide of the invention and the polar organic solvent is very suitable for forming a gas separating asymmetric membrane, and furthermore, a gas separating asymmetric membrane such as a gas separating asymmetric hollow fiber membrane made of such aromatic polyimide exhibits not only excellent properties (heat-resistance, durability *etc.*,) but also high gas transmission rate and gas selectivity at the same time.

From the viewpoint of extruding the aromatic polyimide solution from a spinning nozzle, a solution viscosity (rotational viscosity) of "the dope solution (aromatic polyimide solution) in which the aromatic polyimide is dissolved in a polar organic solvent" to be used for spinning hollow filament in the process for the preparation of the gas separating hollow fiber membrane of the invention is desired to be within a range of 1-2000 Pa•s (10-20,000 P (poise)), preferably 5-1000 Pa•s (50-10,000 P), more preferably 10-800 Pa•s (100-8000 P) at the temperature adopted in the spinning process. Further, sucli solution viscosity is also advantageous in extruding the dope solution through a dye to coat the solution on a substrate.

A logarithmic viscosity of the aromatic polyimide in the above aromatic polyimide solution is preferably within a range of 0.1-7, more preferably 0.2-5 at the temperature of 30 °C (at concentration: 0.5 g/100 ml; solvent: mixed solvent consisting of 4 parts by volume of *p*-chlorophenol and 1 part by volume of *o*-chlorophenol).

The polar organic solvent employed for the preparation of the aromatic polyimide by polymerization and imidization of the above-mentioned acid component and the diamine component can be also directly used as the polar organic solvent in which the above aromatic polyimide is dissolved. It is preferable that the solvent homogeneously dissolve the above aromatic polyimide and be compatible with a coagulation liquid used in the below-described spinning or extruding procedure. Further, the melting point of the solvent is preferably not higher than 200 °C, more preferably not higher than 150 °C. Preferable examples of the polar organic solvents include phenol-type solvents such as phenols (e.g., phenol, cresol and xylenol), catechols having two hydroxyl groups directly connecting to benzene ring, and phenol halides (e.g., 3-chlorophenol, 4-chlorophenol [hereinafter referred to as "PCP"], 4-bromophenol and 2-chloro-5-hydroxytoluene); amide-type solvents such as N-methyl-2-pyrrolidone, N,N-dimethylformamide, N,N-diethylformamide, N,N-dimethylacetamide and N,N-diethylacetamide; and the mixtures of the above-mentioned solvents.

A coagulation liquid used in the preparation of the gas separating asymmetric membrane of the invention is a polar solvent which does not substantially dissolve the aromatic polyimide and which is compatible with the solvent of the aromatic polyimide solution. Examples of the coagulation liquid include water; lower alcohols such as methanol, ethanol, propanol and iso-propanol; ketones such as acetone,

methyl ethyl ketone, diethyl ketone and ethyl propyl ketone; and the mixtures of water and polar organic solvents such as lower alcohols and ketones.

A preferable process for the preparation of the gas separating hollow fiber membrane of the invention, for example, comprises the steps of:

extruding the above-mentioned aromatic polyimide solution to the air from a spinning nozzle to form a hollow filament,

dipping the hollow filament into a primary coagulation liquid (at a temperature of approximately from -10 °C to 60 °C) which is settled just under the spinning nozzle,

coagulating the surface of the hollow filament in the liquid until the filament can retain its shape for itself,

installing the filament around guide rolls,

introducing the filament to a pair of guide rolls in a secondary coagulation liquid,

coagulating the filament thoroughly, as far as its inside portion, by running between the pair of guide rolls,

and finally

winding up the formed gas separating hollow fiber membrane by means of a pulling roll. A rate of pulling the hollow filament by the pulling roll is preferably within a range of approximately 2-80 m/minute.

Preferably, the gas separating hollow fiber membrane formed in the above-described manner is subject to a further procedure which comprises the steps of:

replacing the coagulation liquid remaining in the hollow fiber membrane thoroughly with a substituting solvent of an aliphatic hydrocarbon such as iso-pentane, n-hexane, iso-octane and n-heptane, and

drying the hollow fiber membrane (which swells with the substituting solvent) by evaporating the solvent to prepare the dry hollow membrane;

and also is subjected to the heat treatment at a temperature below the softening point or the second order transition point of the aromatic polyimide constituting the obtained dry hollow membrane.

The polyimide gas separating asymmetric membrane of the present invention is made of a special soluble aromatic polyimide prepared from the tetracarboxylic acid component mainly containing 2,2-bis(3,4-dicarboxyphenyl)hexafluoro-propane or its acid dianhydride, and the aromatic diamine component mainly containing diaminobenzothiophenes, diaminodiphenylenesulfones, diaminothioxanthenes and/or diaminothioxanthones.

The gas separating asymmetric membrane such as a gas separating asymmetric hollow fiber membrane according to the invention exhibits not only high gas selectivities (e.g., $PH_2/PCH_4 \geqq 50$, $PH_2/PN_2 \geqq 30$) for separating hydrogen gas, oxygen gas, methane gas and carbon dioxide gas from the mixture gas containing these gases, but also excellent gas transmission rates for these gases (e.g., hydrogen gas transmission rate $PH_2 \geqq 525 \cdot 10^{-11}$ $m^3/m^2 \cdot s \cdot Pa$ ($70 \cdot 10^{-5}$ $cm^3/cm^2 \cdot sec \cdot cmHg$).

Further, the above-described gas separating asymmetric membrane made of aromatic polyimide can be prepared easily with high reproducibility in accordance with the process of the present invention.

The present invention is further explained below in detail by reference examples and examples, but those examples are given by no means to restrict the invention.

## Reference Example 1

A separable flask equipped with a stirrer and a conduit for introducing thereinto nitrogen gas, was charged with a mixture of 20 mmol of 2,2-bis(3,4-dicarboxyphenyl)hexafluoropropanic dianhydride, 79 mmol of 3,3',4,4'-biphenyltetracarboxylic dianhydride, 90 mmol of 3,7-diaminodimethyldiphenylenesulfone, 10 mmol of 4,4'-diaminodi-phenylether and 311 g of p-chlorophenol. The reaction mixture was subjected to a polymerisation procedure at 180 °C for 16 hours while the mixture was stirred and nitrogen gas flowed through the conduit and flask to prepare a solution of an aromatic polyimide at a concentration of 15 wt.%.

The viscosity (rotational viscosity) of the obtained aromatic polyimide solution was found to be 0.1079 Pa•s (1.079 P) and 0.1507 Pa•s (1.507 P) at temperatures of 100 and 90 °C, respectively.

The logarithmic viscosity of the polymer in the aromatic polyimide solution was also found to be 1.1 (at concentration: 0.5 g/100 g solvent; solvent: mixed solvent consisting of 4 parts by volume of *p*-chlorophenol and 1 part by volume of *o*-chlorophenol).

## Reference Examples 2-9

Various aromatic polyimide solutions were prepared by polymerisation of the aromatic tetracarboxylic acid components and the aromatic diamine components shown in Table 1 in the same manner described in

Reference Example 1.

Determined solution viscosities (rotational viscosities) of these aromatic polyimide solutions at 100 °C were set forth in Table 1.

The logarithmic viscosities of the polymers in the aromatic polyimide solutions obtained in Reference Examples 2, 4-6, 8-9 were found to be 1.0, and those in Reference Examples 3 and 7 were 0.9 (determined conditions were the same as in Reference Example 1).

Reference Example 10

A separable flask equipped with a stirrer and a conduit for introducing thereinto nitrogen gas, was charged with a mixture of 99 mmol of 2,2-bis(3,4-dicarboxyphenyl)hexafluoropropanic dianhydride, 100 mmol of 1,3-diamino-4,6-dimethylbenzene and 309 g of p-chlorophenol. The reaction mixture was subjected to a polymerization procedure at 180 °C for 58 hours while the mixture was stirred and nitrogen gas flowed through the conduit and flask. The viscosity of the obtained reaction solution was found to be not more than 0.1 Pa•s (1 P) (at 100 °C), and it meant that a polyimide having a high molecular weight was not produced. Therefore, a dope solution (polyimide solution) usable for spinning a hollow fiber membrane was not be prepared.

In other words, an aromatic polyimide of high degree of polymerization is not always prepared by polymerization of 2,2-bis(3,4-dicarboxyphenyl)hexafluoropropanic dianhydride with an aromatic diamine of diaminobenzene-type.

Symbols in Table 1 represent the following compounds.

| | |
|---|---|
| S-BPDA | :3,3',4,4'-biphenyltetracarboxylic dianhydride |
| 6-FDA | :2,2-bis(3,4-dicarboxyphenyl)hexafluoropropanic dianhydride |
| TSN | :3,7-diaminodimethyldiphenylenesulfone |
| DADE | :4,4'-diaminodiphenylether |
| DABA | :3,5-diaminobenzoic acid |
| DMTX | :3,7-diamino-2,8-dimethylthioxanthene-5,5-dioxide |
| DADM | :4,4'-diaminodiphenylmethane |
| MMP | :1,3-diamino-4,6-dimethylbenzene |

Table 1

| Ref. Ex. | Monomer Components | | | | Viscosity of Polymer Solution at 100°C/Pa•s (p) |
|---|---|---|---|---|---|
| | Acid Comp. | /mmol | Diamine Comp. | /mmol | |
| 1 | 6-FDA<br>S-BPDA | 20<br>79 | TSN<br>DADE | 90<br>10 | 0.1079(1,079) |
| 2 | 6-FDA | 99 | DADE<br>DADM | 60<br>40 | 91.1 (911) |
| 3 | 6-FDA | 98 | TSN<br>DADE | 30<br>70 | 80.0 (800) |
| 4 | 6-FDA | 98 | DMTX<br>DADE | 90<br>10 | 87.4 (874) |
| 5 | 6-FDA | 50 | TSN | 60 | 94.9 (949) |
| | S-BPDA | 49 | DMTX<br>DABA | 30<br>10 | |
| 6 | 6-FDA<br>S-BPDA | 50<br>49 | TSN<br>DADE | 90<br>10 | 0.1023(1,023) |
| 7 | 6-FDA | 99 | TSN<br>DADE | 90<br>10 | 78.1 (781) |
| 8 | 6-FDA | 99 | TSN<br>DADE | 70<br>30 | 83.7 (837) |
| 9<br>10 | 6-FDA<br>6-FDA | 99<br>99 | TSN<br>MMP | 100<br>100 | 95.0 (950)<br>not more than 0.1 (not more than 1) |

Examples 1-6

Dope solutions for spinning were independently prepared by filtrating the aromatic polyimide solutions obtained in Reference Examples 4-9 over stainless steel wire nets of 400 mesh.

A spinning apparatus equipped with a hollow filament spinning nozzle (external diameter of the round aperture: 1,000 µm; slit width of the round aperture: 200 µm; external diameter of the core aperture: 400 µm) was charged with each dope solution and then each dope solution was extruded to a nitrogen gas atmosphere from the spinning nozzle to form a hollow filament. Each obtained hollow filament was dipped into a primary coagulation liquid of 65 wt.% ethanol aqueous solution (at 0°C), and further, was accomplished the coagulation by running between a pair of guide rolls in a secondary coagulation liquid (at approximately 0°C) in a secondary coagulation apparatus provided with the guide rolls. Thus obtained gas separating asymmetric hollow fiber membrane made of aromatic polyimide was pulled by a pulling roll (at the rate of 15 m/minute).

Finally, each obtained asymmetric hollow fiber membrane was wound up around a bobbin. After remaining coagulation solvent was thoroughly washed out with ethanol, the ethanol was replaced with iso-octane (that is, substituting solvent), and then each asymmetric hollow fiber membrane was heated to 100°C in order to evaporate iso-octane to dryness. Further, each asymmetric hollow fiber membrane was subjected to a heat treatment for 30 minutes at a temperature shown in Table 2 to prepare a dry and heat-treated gas separating asymmetric hollow fiber membrane made of aromatic polyimide.

The results of measurement for gas permeating properties (gas transmission rate and gas selectivity) of the obtained gas separating asymmetric hollow fiber membranes made of aromatic polyimide are also set forth in Table 2.

The above gas permeating properties were measured in a following manner.

First of all, a hollow fiber element for estimating gas permeating property was composed of the asymmetric hollow fiber membrane prepared above, a stainless steel pipe and epoxy-type adhesive.

Then, by means of the hollow fiber element for estimating gas permeating property installed in a container made of stainless steel, a gas permeating test was carried out with respect to a mixture of

hydrogen gas and methane gas or a mixture of carbon dioxide gas and methane gas under the conditions that the temperature was 50 °C and the pressure was 10 kg/cm$^2$. Gas transmission rates and the ratios of gas transmission rates (which mean selective permeabilities and gas selectivities) were calculated from measured values of gas chromatography analysis.

Comparison Examples 1-3

The procedure of Example 1 was repeated except using aromatic polyimide solutions obtained in Reference Examples 1-3 to prepare asymmetric hollow fiber membranes.

Gas permeating property of each asymmetric hollow fiber membrane was measured in the same manner as described in Example 1.

Gas permeating properties of obtained asymmetric hollow fiber membranes are set forth in Table 2.

Comparison Example 4

The reaction solution obtained in Reference Example 9 had too low viscosity to form an asymmetric hollow fiber membrane.

Table 2

| Aromatic Polyimide | | Temp. of Heat /°C | Gas Permeating Property of Membranes: Gas trans. Rates* $PH_2$ | $PCO_2$ (× $10^{-5}$)*** | $PO_2$ | Gas selectivity** $PH_2/PCH_4$ | $PCO_2/PCH_4$ | $PO_2/PN_2$ | $PH_2/PN_2$ |
|---|---|---|---|---|---|---|---|---|---|
| Ex.1 | R.Ex.4 | 390 | 79 | 22 | 9.3 | 75 | 21 | 4.8 | 41 |
| 2 | 5 | 280 | 71 | 20 | 8.5 | 71 | 20 | 4.4 | 37 |
| 3 | 6 | 270 | 78 | 21 | 9.1 | 65 | 18 | 4.7 | 40 |
| 4 | 7 | 370 | 88 | 24 | 10.1 | 80 | 22 | 4.7 | 41 |
| 5 | 8 | 350 | 72 | 21 | 8.3 | 51 | 15 | 4.1 | 36 |
| 6 | 9 | 270 | 75 | 23 | 8.5 | 79 | 24 | 4.6 | 41 |
| C.Ex.1 | R.Ex.1 | 300 | 28 | 7.1 | 1.67 | 109 | 28 | 4.6 | 77 |
| 2 | 2 | 290 | 35 | 15 | 5.4 | 6 | 2.3 | 1.2 | 7.8 |
| 3 | 3 | 330 | 78 | 19 | 7.2 | 33 | 8 | 2.3 | 25 |

note:

*) $cm^3/cm^2 \cdot sec \cdot cmHg$ **) selective permeability

***) values in $\frac{m^3}{m^2 \cdot s \cdot Pa}$ are obtained by multiplying the above values with the factor $7.5 \cdot 10^{-6}$

## Claims

1. A gas separating asymmetric hollow fiber membrane comprising an aromatic polyimide of which recurring unit is expressed by the formula (I):

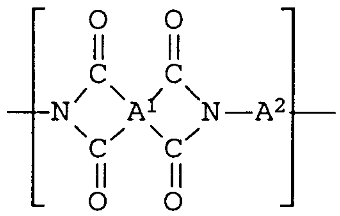

(I)

wherein $A^1$ is a tetravalent unit at least 40 molar % of which has a diphenylhexafluoropropane structure expressed by the formula (II):

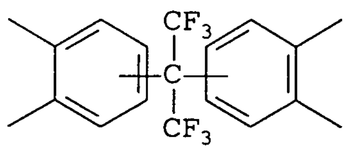

(II)

and $A^2$ comprises at least two divalent units, at least 35 molar % of which is selected from the group consisting of

a unit expressed by the formula (IV):

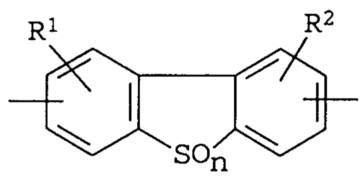

(IV)

in which $R^1$ and $R^2$ independently represent hydrogen or an organic group and n is 0, 1 or 2, and

a unit expressed by the formula (V):

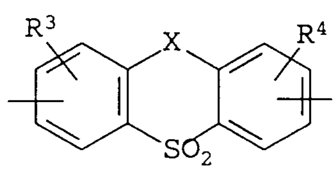

(V)

in which $R^3$ and $R^4$ independently represent hydrogen or an organic group and X is $-CH_2-$ or -CO-, and the rest of $A^2$ is a divalent unit derived from a divalent aromatic amine by eliminating its amine groups, said divalent aromatic amine being selected from the group consisting of diaminodiphenylethers, diaminodiphenylmethanes, diaminodibenzyls, diaminobenzophenones, bis(aminophenyl)propanes, benzidines, phenylenediamines, 3,5-diaminobenzoic acid and 2,6-diaminopyridine.

2. The gas separating asymmetric membrane as defined in claim 1, wherein the rest of $A^1$ is a tetravalent biphenyl unit expressed by the formula (III):

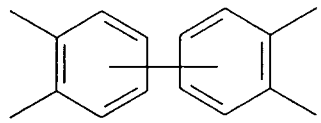

(III)

3. The gas separating asymmetric membrane as defined in claim 1, wherein all of $A^1$ is a tetravalent unit having diphenylhexafluoropropane structure of the formula (II).

4. The gas separating asymmetric membrane as defined in claim 1, wherein each of $R^1$, $R^2$, $R^3$ and $R^4$ independently is hydrogen or an alkyl group having 1-6 carbon atoms.

5. A process for the preparation of a gas separating asymmetric hollow fiber membrane which comprises the steps of:
preparing a dope solution in which an aromatic polyimide of which recurring unit is expressed by the formula (I):

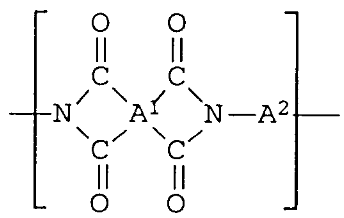

(I)

wherein $A^1$ is a tetravalent unit at least 40 molar % of which has a diphenylhexafluoropropane structure expressed by the formula (II):

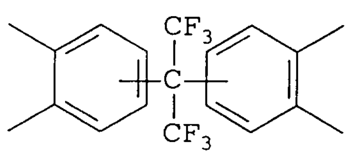

(II)

and $A^2$ comprises at least two divalent units, at least 35 molar % of which is selected from the group consisting of
a unit expressed by the formula (IV):

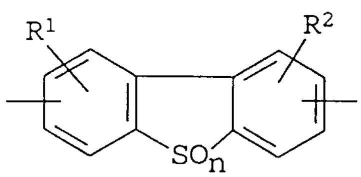

(IV)

in which $R^1$ and $R^2$ independently represent hydrogen or an organic group and n is 0, 1 or 2, and
a unit expressed by the formula (V):

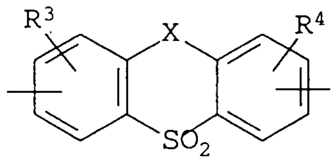

(V)

in which $R^3$ and $R^4$ independently represent hydrogen or an organic group and X is $-CH_2-$ or -CO-, and the rest of $A^2$ is a divalent unit derived from a divalent aromatic amine by eliminating its amine groups, said divalent aromatic amine being selected from the group consisting of diaminodiphenylethers, diaminodiphenylmethanes, diaminodibenzyls, diaminobenzophenones, bis(aminophenyl)propanes, benzidines, phenylenediamines, 3,5-diaminobenzoic acid and 2,6-diaminopyridine. is dissolved in a polar organic solvent,

extruding the dope solution from a spinning nozzle in the form of a hollow filament, and

introducing the formed hollow filament into a coagulation liquid of a polar organic solvent to form a coagulated gas separating asymmetric hollow fiber membrane.

**6.** The process as defined in claim 5, wherein the polar organic solvent for the preparation of the dope solution is phenol, cresol, xylenol, catechol, 3-chlorophenol, 4-chlorophenol, 4-bromophenol, 2-chloro-5-hydroxytoluene, N-methyl-2-pyrrolidone, N,N-dimethylformamide, N,N-diethylformamide, N,N-dimethylacetamide or N,N-diethylacetamide.

**7.** The process as defined as claim 5, wherein the coagulating liquid comprises water, methanol, ethanol, n-propanol, isopropanol, acetone, methyl ethyl ketone, diethyl ketone, or ethyl propyl ketone.

**8.** The process as defined as claim 5, wherein the coagulating liquid is a mixture of water and at least one organic solvent selected from the group consisting of methanol, ethanol, n-propanol, isopropanol, acetone, methyl ethyl ketone, diethyl ketone, and ethyl propyl ketone.

**Patentansprüche**

**1.** Asymmetrische Gastrenn-Hohlfasermembran, umfassend ein aromatisches Polyimid, dessen wiederkehrende Einheit durch die Formel (I)

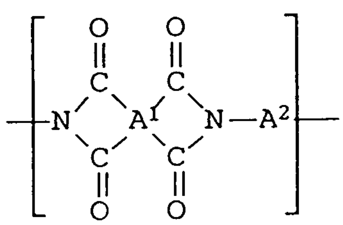

(I)

angegeben wird, worin $A^1$ eine vierwertige Einheit bedeutet, von der mindestens 40 Mol-% eine Diphenylhexafluorpropan-Struktur der Formel (II)

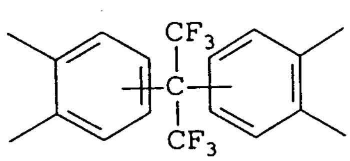

(II)

aufweisen, und worin $A^2$ mindestens zwei zweiwertige Einheiten umfaßt, von denen mindestens 35 Mol-% aus der Gruppe, bestehend aus

einer Einheit der Formel (IV)

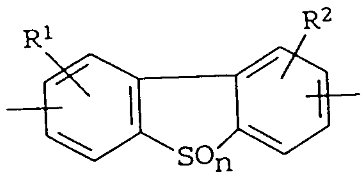

(IV)

worin $R^1$ und $R^2$ unabhängig voneinander für Wasserstoff oder eine organische Gruppe stehen, und n den Wert 0, 1 oder 2 hat und

eine Einheit der Formel (V)

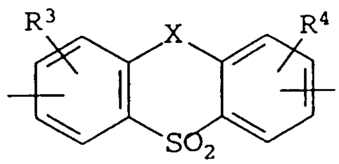

(V)

worin $R^3$ und $R^4$ unabhängig voneinander für Wasserstoff oder eine organische Gruppe stehen und X für $-CH_2$ oder -CO- steht, ausgewählt sind, und wobei der Rest von $A^2$ eine Zweiwertige Einheit ist, die sich von einem zweiwertigen aromatischen Amin durch Eliminierung seiner Amingruppen ableitet, wobei das zweiwertige aromatische Amin aus der Gruppe, bestehend aus Diaminodiphenylethern, Diamindiphenylmethanen, Diaminodibenzylen, Diaminobenzophenonen, Bis(aminophenyl)propanen, Benzidinen, Phenylendiaminen, 3,5-Diaminobenzoesäure und 2,6-Diaminopyridin ausgewählt ist.

2. Asymmetrische Gastrenn-Hohlfasermembran nach Anspruch 1, dadurch **gekennzeichnet,** daß der Rest von $A^1$ eine vierwertige Biphenyleinheit der Formel (III)

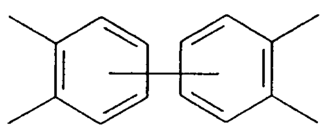

(III)

ist.

3. Asymmetrische Gastrenn-Hohlfasermembran nach An-spruch 1, dadurch **gekennzeichnet,** daß das gesamte $A^1$ aus einer vierwertigen Einheit mit einer Diphenylhexafluorpropan-Struktur der Formel (II) besteht.

4. Asymmetrische Gastrenn-Hohlfasermembran nach Anspruch 1, dadurch **gekennzeichnet,** daß $R^1$, $R^2$, $R^3$ und $R^4$ jeweils unabhängig voneinander für Wasserstoff oder eine Alkylgruppe mit 1 bis 6 Kohlenstoffatomen stehen.

5. Verfahren zur Herstellung einer asymmetrischen Gastrenn-Hohlfasermembran, umfassend die Stufen:

Herstellung einer Polymerlösung, in der ein aromatisches Polyimid, dessen wiederkehrende Einheit durch die Formel (I)

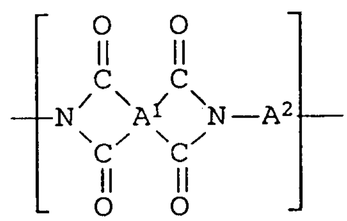

(I)

angegeben wird, worin $A^1$ eine vierwertige Einheit bedeutet, von der mindestens 40 Mol-% eine Diphenylhexafluorpropan-Struktur der Formel (II)

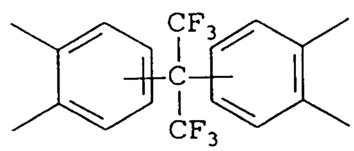

(II)

aufweisen, und worin $A^2$ mindestens zwei zweiwertige Einheiten umfaßt, von denen mindestens 35 Mol-% aus der Gruppe, bestehend aus

einer Einheit der Formel (IV)

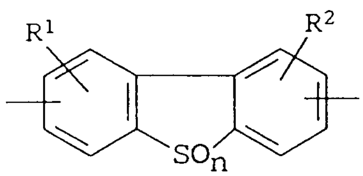

(IV)

worin $R^1$ und $R^2$ unabhängig voneinander für Wasserstoff oder eine organische Gruppe stehen, und n den Wert 0, 1 oder 2 hat und

eine Einheit der Formel (V)

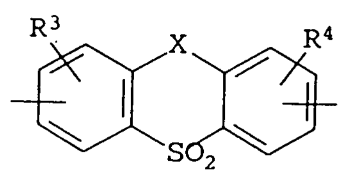

(V)

worin $R^3$ und $R^4$ unabhängig voneinander für Wasserstoff oder eine organische Gruppe stehen und X für $-CH_2$ oder -CO- steht, ausgewählt sind, und wobei der Rest von $A^2$ eine zweiwertige Einheit ist, die sich von einem zweiwertigen aromatischen Amin durch Eliminierung seiner Amingruppen ableitet, wobei das zweiwertige aromatische Amin aus der Gruppe, bestehend aus Diaminodiphenylethern, Diamindiphenylmethanen, Diaminodibenzylen, Diaminobenzophenonen, Bis(aminophenyl)propanen, Benzidinen, Phenylendiaminen, 3,5-Diaminobenzoesäure und 2,6-Diaminophyridin ausgewählt ist, in einem polaren organischen Lösungsmittel gelöst ist,

Extrudierung der Polymerlösung aus einer Spinndüse in Form eines Hohlfadens bzw. -filaments und

Einführung des so gebildeten Hohlfadens bzw. -filaments in eine Koagulationsflüssigkeit aus einem polaren organischen Lösungsmittel, um eine koagulierte asymmetrische Gastrenn-Hohlfasermembran zu bilden.

6. Verfahren nach Anspruch 5, dadurch **gekennzeichnet,** daß das zur Herstellung der Polymerlösung verwendete polare organische Lösungsmittel Phenol, Kresol, Xylenol, Brenzcatechin, 3-Chlorphenol, 4-Chlorphe-nol, 4-Bromphenol, 2-Chlor-5-hydroxytoluol, N-Methyl-2-pyrrolidon, N,N-Dimethylformamid, N,N-Diethylformamid, N,N-Dimethylacetamid oder N,N-Diethylacetamid ist.

7. Verfahren nach Anspruch 5, dadurch **gekennzeichnet,** daß die Koagulierungsflüssigkeit Wasser, Methanol, Ethanol, n-Propanol, Isopropanol, Aceton, Methylethylketon, Diethylketon oder Ethylpropylketon umfaßt.

8. Verfahren nach Anspruch 5, dadurch **gekennzeichnet,** daß die Koagulierungsflüssigkeit ein Gemisch aus Wasser und mindestens einem organischen Lösungsmittel, ausgewählt aus der Gruppe, bestehend aus Methanol, Ethanol, n-Propanol, Isopropanol, Aceton, Methylethylketon, Diethylketon und Ethylpropylketon ist.

## Revendications

1. Membrane asymétrique à libres creuses pour la séparation de gaz, comprenant un polyimide aromatique dont l'unité récurrente est exprimée par la formule (I) :

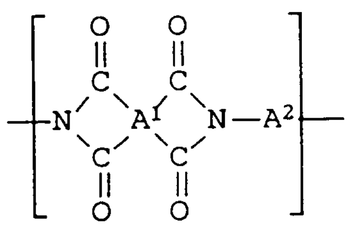

(I)

dans laquelle $A^1$ est une unité tétravalente dont au moins 40% en moles ont une structure diphénylhexafluoropropane exprimée par la formule (II) :

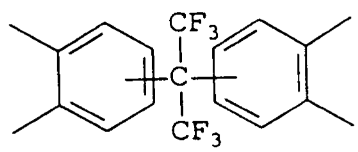

(II)

et $A^2$ comprend au moins deux unités divalentes, dont au moins 35% en moles sont choisis dans le groupe consistant en :

une unité exprimée par la formule (IV) :

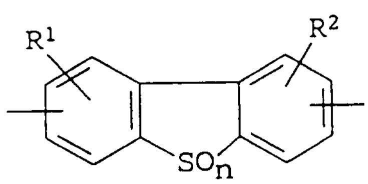

(IV)

dans laquelle $R^1$ et $R^2$ sont indépendamment un atome d'hydrogène ou un groupe organique et n est 0,1 ou 2, et

une unité exprimée par la formule (V) :

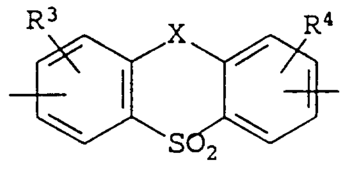

(V)

dans laquelle $R_3$ et $R_4$ représentent indépendamment un atome d'hydrogène ou un groupe organique et X est un groupe $-CH_2-$ ou -CO-,et le reste de $A^2$ est constitué par une unité divalente dérivée d'une amine aromatique divalente par élimination de ses groupes amines, cette amine aromatique divalente étant choisie dans le groupe consistant en éthers diaminodiphényliques, diaminodiphénylméthanes, diaminodibenzyles, diaminobenzophénones, bis(aminophényl)-propanes, benzidines, phénylènediamines, acide 3,5-diaminobenzoïque et 2,6-diaminopyridine.

**2.** Membrane asymétrique pour la séparation de gaz suivant la revendication 1, dans laquelle le reste de $A^1$ est une unité biphényle tétravalente exprimée par la formule (III) :

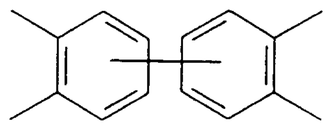

(III)

**3.** Membrane asymétrique pour la séparation de gaz suivant la revendication 1, dans laquelle la totalité de $A^1$ est une unité tétravalente ayant la structure diphénylhexafluoropropane de formule (II).

**4.** Membrane asymétrique pour la séparation de gaz suivant la revendication 1, dans laquelle chacun des $R^1$, $R^2$, $R^3$ et $R^{1-4}$ est indépendamment un atome d'hydrogène ou un groupe alkyle ayant 1 à 6 atomes de carbone.

**5.** Procédé pour la préparation d'une membrane asymétrique à fibres creuses pour la séparation de gaz, qui comprend les étapes de :

préparation d'une solution visqueuse dans laquelle un polyimide aromatique dont l'unité récurrente est exprimée par la formule (I) :

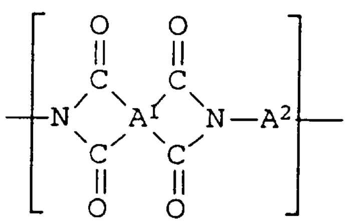

(I)

dans laquelle $A^1$ est une unité tétravalente dont au moins 40% en moles ont une structure diphénylhexafluoropropane exprimée par la formule (II) :

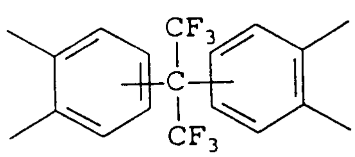

(II)

et $A^2$ comprend au moins deux unités divalentes, dont au moins 35% en moles sont choisis dans le groupe consistant en :

une unité exprimée par la formule (IV) :

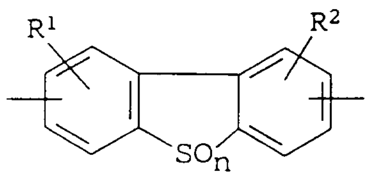

(IV)

dans laquelle $R^1$ et $R^2$ représentent indépendamment un atome d'hydrogène ou un groupe organique et n est 0,1 ou 2, et

une unité exprimée par la formule (V) :

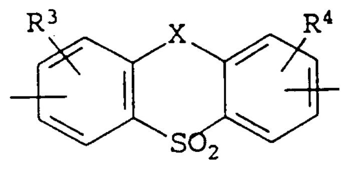

(V)

dans laquelle $R_3$ et $R_4$ représentent indépendamment un atome d'hydrogène ou un groupe organique et X est un groupe $-CH_2-$ ou -CO-, et le reste de $A^2$ est constitué par une unité divalente dérivée d'une amine aromatique divalente par élimination de ses groupes amines, cette amine aromatique divalente étant choisie dans le groupe consistant en éthers diaminodiphényliques, diaminodiphénylméthanes, diaminodibenzyles, diaminobenzophénones, bis-(aminophényl)-propanes, benzidines, phénylènediamines, acide 3,5-diaminobenzoïque et 2,6-diaminopyridine,
est dissous dans un solvant organique polaire,

extrusion de la solution viqueuse à partir d'une buse de filage sous la forme d'un filament creux, et

introduction du filament creux formé dans un liquide de coagulation constitué par un solvant organique polaire pour former une membrane coagulée asymétrique à fibres creuses pour la séparation de gaz.

**6.** Procédé suivant la revendication 5, dans lequel le solvant organique polaire pour la préparation de la solution visqueuse est le phénol, le crésol, le xylénol, le catéchol, le 3-chlorophénol le 4-chlorophénol, le 4-bromophénol, le 2-chloro-5-hydroxytoluène, la N-méthyl-2-pyrrolidone, le N,N-diméthylformamide, le N,N-diéthylformamide, le N,N-diméthylacétamide ou le N,N-diéthylacétamide.

**7.** Procédé suivant la revendication 5, dans lequel le liquide coagulant comprend l'eau, le méthanol, l'éthanol, le n-propanol, l'isopropanol, l'acétone, la méthyl éthyl cétone, la diéthyl cétone ou l'éthyl propyl cétone.

**8.** Procédé suivant la revendication 5, dans lequel le liquide coagulant est un mélange d'eau et d'au moins un solvant organique choisi dans le groupe consistant en méthanol, éthanol, n-propanol, isopropanol, acétone, méthyl éthyl cétone, diéthyl cétone ou éthyl propyl cétone.